# EUROPEAN PATENT SPECIFICATION

(11) **EP 3 885 737 B1**
(45) Date of publication and mention of the grant of the patent: **22.06.2022**
(21) Application number: 21163355.7
(22) Date of filing: 18.03.2021
(51) Int. Cl.: G01N 1/30, G01N 1/06, G01N 1/36, G01N 1/28, G01N 23/2251, G01N 1/32

(54) **METHOD FOR OBSERVING BIOLOGICAL TISSUE SAMPLE**
VERFAHREN ZUR BEOBACHTUNG EINER PROBE AUS BIOLOGISCHEM GEWEBE
PROCÉDÉ D'OBSERVATION D'UN ÉCHANTILLON DE TISSU BIOLOGIQUE

(30) Priority: 18.03.2020 JP 2020047397
(43) Date of publication of application: 29.09.2021
(73) Proprietor: Hitachi High-Tech Science Corporation, Minato-ku Tokyo 105-6411 (JP)
(72) Inventor: MAN, Xin, Tokyo 105-6411 (JP); ASAHATA, Tatsuya, Tokyo 105-6411 (JP)
(74) Representative: Miller Sturt Kenyon

(56) References cited:
- WO-A1-2009/032904
- WO-A1-2019/157068
- US-A1- 2014 092 230

## Description

### TECHNICAL FIELD

The present disclosure relates to a method for observing a biological tissue sample.

### BACKGROUND

In survey research of a biological tissue in fields of medical biology, regenerative medicine, and drug discovery, it is required to three-dimensionally observe a form of the biological tissue. For example, in regenerative medicine, a mini organ (which may also be called as a miniature organ, an organoid, etc.,) that is an origin of an organ is created from iPS cells. The mini-organ is also used for screening in research and development in drug discovery. A need for further cutting such a mini-organ into several pieces to three-dimensionally grasp a micro structure of an organ or a tissue is very high.

However, three-dimensional observation of a biological tissue is not always easy due to capacity (magnification, focus depth, and resolution) of a microscope used for observation, and has various problems. For example, in order to three-dimensionally grasp a structure of the biological tissue such as an organ, it is required to collectively observe the tissue in units of several tens of µm in a depth direction.

Due to limitation of a wavelength of light, an optical microscope has a resolution to about several hundred nm and a maximum magnification to about several thousand times. Since a resolution of the naked eye is about 0.1 mm, it is difficult to observe the biological tissue in more detail with the optical microscope. In addition, a normal optical microscope has an insufficient focus depth, and it is difficult to three-dimensionally observe the biological tissue.

Therefore, for example, a method of three-dimensionally observing the biological tissue by using a transmission electron microscope (TEM) has also been proposed. The transmission electron microscope (TEM) has a resolution of about 0.1 nm, and observation at a magnification of about 500,000 times at the maximum is possible. However, an observation method by the TEM has a sufficiently high resolution, but has limitation on a sample thickness due to a transmission ability. Specifically, due to necessity to transmit an electron beam that generates a very strong interaction with a sample, it is necessary to reduce a thickness of the sample to less than 1 µm. For this reason, the TEM is suitable for analyzing an internal structure of a cell, but is not suitable for the purpose of observing the three-dimensional structure of the tissue.

On the other hand, a scanning electron microscope (SEM) has a capacity to perform analysis at a tissue level three-dimensionally with high resolution. In the SEM, a diameter of the electron beam is converged to 2 nm to 3 nm or less to observe an image, and the diameter of the electron beam reaches a limit of the resolution, so that an object can be observed at a magnification of 100,000 times or more at the maximum.

However, in observation of a biological tissue with a SEM, it is necessary to use a freeze fracture method to observe a three-dimensional structure in the related art. In this case, a dedicated freezing device for freezing the sample is required, and there is a problem that it is difficult to aim at and fracture a part to be observed. In addition, in the freeze fracture method, it is necessary to coat a sample surface with metal, and only a form of the surface can be observed, which is not suitable for the purpose of observing the three-dimensional structure of the tissue.

For this reason, for example, WO 2019/082293 (PTL 1) discloses a method for observing a biological tissue sample in which a sample having a thickness of about 15 µm to 50 µm is cut out from a sample block obtained by fixing, dehydrating, and paraffin-embedding a sample cut out from a biological tissue and is transferred onto a slide glass, and the sample is subjected to a deparaffinization treatment, then stained with a heavy metal stain, and observed with a SEM.

However, in the method for observing a biological tissue sample described in PTL 1, a skillful technique is required for cutting out a biological tissue, and it is difficult to reduce the thickness of the sample in order to observe the sample more precisely. In addition, an orientation of the obtained sample is not constant, and alignment of a SEM image is necessary at the time of observation. Furthermore, in a case where the biological tissue to be observed is present in a narrow range in the sample, it is necessary to cut the entire sample in a wide range to expose the biological tissue to be observed.

WO 2019/157068 A1 discloses a microscopy system comprising a gas cluster beam system configuredj for generating a beam of gas clusters directed toward a sample to irradiate a sample and mill away successive surface layers from the sample, a scanning electron microscope system configured for irradiating the successive surface layers of the sample with an electron beam and for imaging the successive surface layers of the sample in response to the irradiation of the surface layer, and a processor configured for generating a three dimensional image of the sample based on the imaging of the successive layers of the sample.

### SUMMARY

The present disclosure provides a method, as defined in claim 1, for observing a biological tissue sample capable of easily grasping an observation target area present in a biological tissue and easily cutting out a plurality of sample pieces from a sample block of the biological tissue. Preferred features are set out in the dependent claims.

The method of observing a biological tissue sample of the present disclosure is an observation method of a biological tissue sample for observing a three-dimensional structure of the biological tissue sample, the method including: cutting out a sample from the biological tissue, staining the sample, and embedding the sample in a resin to form a sample block; cutting up the sample block into a plurality of sample pieces and fixing each of the sample pieces to a sample piece placement member to form a plurality of observation samples; observing each of the observation samples with an optical microscope and specifying an observation target area for performing precise observation; observing the observation target area with a scanning electron microscope and specifying and registering a coordinate of the observation target area on the sample piece for each of the observation samples; milling the sample piece including irradiating the observation target area of the sample piece with an ion beam using gas as an ion source or a neutral particle beam with reference to the coordinate and exposing an observation surface inside the sample piece; and obtaining a SEM image of the observation surface with the scanning electron microscope.

According to the present disclosure, the sample block obtained by embedding the biological tissue is cut into a plurality of sample pieces, and a SEM image is obtained while shaving each of the sample pieces in the depth direction by milling, so that when the plurality of sample pieces were cut from the sample block, a thickness of each of the sample pieces can be cut out thicker than that in the related art. Accordingly, it is possible to easily cut out a sample piece which requires an advanced technology in the related art.

In addition, in order to shave the observation target area of each of the sample pieces in the depth direction, milling is performed by the ion beam using gas as an ion source or a neutral particle beam, and thus it is possible to expose the observation surface set inside the depth direction without damaging cells or the like of a resin embedding object of the biological tissue which is a relatively soft sample.

In addition, by first observing the sample piece with an optical microscope to specify the observation target area, then finding out the specified observation target area by SEM observation, and recording a coordinate thereof, it is possible to accurately shave the observation target area in the depth direction to obtain a SEM image in the milling step and the imaging step.

In the present disclosure, the milling of the sample piece and the obtaining of the SEM image may be alternately performed a plurality of times to obtain the SEM image in a thickness direction of the observation target area of the sample piece.

In the present disclosure, the sample piece may be left on the sample piece placement member after the milling of the sample piece and the obtaining of the SEM image are alternately performed the plurality of times.

In the present disclosure, the sample piece may have a thickness in a range of 100 nm or more and 300 nm or less.

In the present disclosure, the cutting up of the sample block may include cutting out the plurality of sample pieces continuous in a depth direction from the sample block embedded in the resin so that each of the sample pieces to have a thickness in a range of 100 nm or more and 300 nm or less by using a cutter.

In the present disclosure, the gas used in the milling of the sample piece may be argon or xenon.

The present disclosure may provide a method for observing a biological tissue sample capable of easily grasping an observation target area present in a biological tissue and easily cutting out a plurality of sample pieces from a sample block of the biological tissue.

### BRIEF DESCRIPTION OF DRAWINGS

FIG. 1 is a flowchart showing a method for observing a biological tissue sample of the present disclosure in stages;
FIG. 2 is an external view showing a plurality of observation samples to which sample pieces are fixed; and
FIG. 3 is a schematic configuration diagram showing a scanning electron microscope.

### DETAILED DESCRIPTION

Hereinafter, the present illustrative embodiment is described in detail while referring to the drawings as appropriate. In the drawings used in the following description, for the sake of convenience, characteristic parts may be shown in an enlarged manner in order to make characteristics of the present disclosure easy to understand, and a dimensional ratio or the like of each constituent element may be different from actual one. Materials, dimensions, or the like exemplified in the following description are merely examples, the present disclosure is not limited thereto, and they can be appropriately changed and carried out within a range in which the effects of the present disclosure are taken.

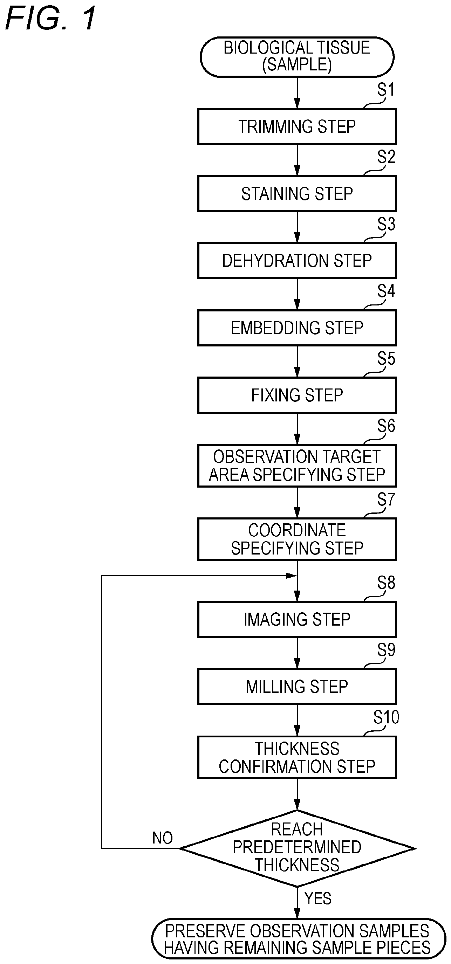

FIG. 1 is a flowchart showing a method for observing a biological tissue sample of the present disclosure in stages.

Examples of the biological tissue applied to the present illustrative embodiment include tissue pieces and cell aggregations of various organs, mini organs produced from iPS cells, or the like. First, such a biological tissue is shaped (trimmed) into a cylindrical shape having a diameter of about several mm or a rectangular parallelepiped having a square of several mm by using a knife, for example, a single edged razor (trimming step S1). In a case where an original size is about 1 mm as that of a mini organ or the like, the trimming step S1 can be omitted.

Next, the trimmed biological tissue is fixed with a formalin solution or the like, and then a staining treatment is performed (staining step S2). Various stains can be used for staining the biological tissue, for example, a toluidine blue solution can be used. Toluidine blue is a basic tar-based pigment and shows abnormal staining (metachromasia) on acidic mucus polysaccharides in a biological tissue, such as connective tissues (hyaluronic acid, chondroitin sulfate B), cartilage matrixes (mucoitin sulfate, chondroitin sulfate A and C), mast cells (heparin), and intraepithelial mucus.

Next, a dehydration treatment of the biological tissue after staining is performed (dehydration step S3). Dehydration of the biological tissue is performed by, for example, ethanol dehydration. At this time, whether or not embedding in a resin is successful is determined by whether or not the dehydration by ethanol having a concentration of 100 wt % is strictly performed, and thus the ethanol having a concentration of 100 wt % may be prepared and used by using anhydrous copper sulfate in advance.

Next, the biological tissue after dehydration is embedded in a resin to obtain a sample block (embedding step S4). In the embedding step S4, it is necessary to promote penetration of the embedding resin into the biological tissue in advance. For example, a hydrophobic resin such as an epoxy resin is not easily dissolved even in ethanol having a concentration of 100 wt %. In order to diffuse the resin for embedding to every corner of the biological tissue at an electron microscope level, it is necessary to substitute both ethanol and the resin with a solvent (substituting agent) having a high affinity.

In a case where an epoxy resin is used in the resin for embedding, propylene oxide is preferably used as such a substituting agent. For example, an epoxy resin is dissolved in propylene oxide to conform to the biological tissue. Then, propylene oxide is evaporated and then embedded in the epoxy resin. Thereafter, by drying at about 60°C to 80°C, the sample block in which the biological tissue is embedded in a resin is obtained.

Next, the sample block is cut into a plurality of sample pieces, and each sample piece is fixed to a glass plate which is a sample piece placement member to form a plurality of observation samples (fixing step S5). A plastic slide or the like may be used instead of the glass plate. First, in order to cut the sample block embedded in a resin into a plurality of sample pieces, for example, the sample block embedded in a resin is attached to a microtome. In order to cut out the sample piece from the sample block, for example, a plurality of sample pieces continuous in a depth direction are cut out from the sample block so as to have a thickness in a range of, for example, 100 nm or more and 300 nm or less by using, for example, a glass knife.

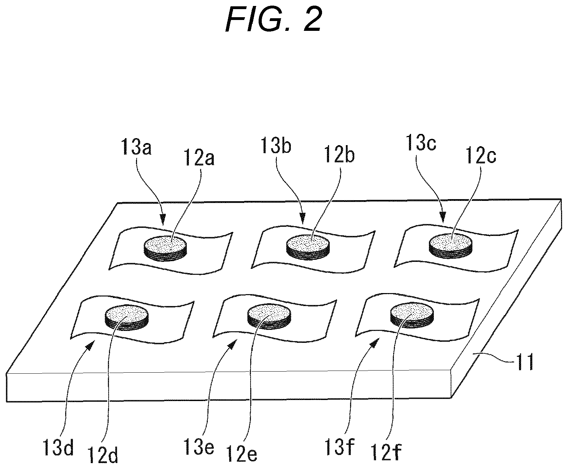

The cut-out sample piece is placed on water droplets dropped on the glass plate (slide glass) to evaporate water. Accordingly, as shown in FIG. 2, a plurality of observation samples 13a to 13f in which continuous sample pieces 12a to 12f are fixed to a glass plate 11 are obtained.

Next, each of the observation samples 13a to 13f obtained in this manner is observed with an optical microscope, and an observation target area to be subjected to precise observation is specified (observation target area specifying step S6). In the observation target area specifying step S6, the observation samples 13a to 13f are sequentially set on a sample stage of the optical microscope, each of the sample pieces 12a to 12f is observed, and the observation target area in which stereoscopic observation in the depth direction is performed is determined.

Next, the observation target area for performing stereoscopic observation specified in the observation target area specifying step S6 is observed using a scanning electron microscope (SEM), and a coordinate of the observation target area on the sample pieces 12a to 12f is specified and registered for each of the observation samples 13a to 13f (coordinate specifying step S7).

In the coordinate specifying step S7, a SEM image of a surface of each of the observation samples 13a to 13f is obtained by the SEM, and based on the SEM image, the coordinate value (X axis, Y axis) of the observation target area on the sample pieces 12a to 12f, which is specified in the observation target area specifying step S6, is stored in a controller of the SEM.

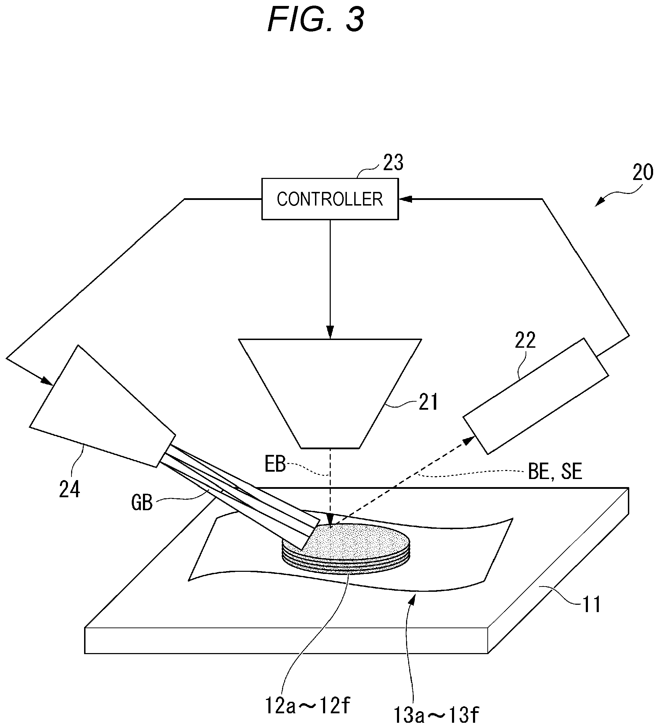

Next, as shown in FIG. 3, the observation samples 13a to 13f (see FIG. 2) are sequentially set on the scanning electron microscope (SEM) 20 to obtain SEM images of observation surfaces on the sample pieces 12a to 12f (imaging step S8).

In observation of the biological tissue using the SEM 20, charging of the biological tissue can be reduced by using a low-vacuum scanning electron microscope (low-vacuum SEM). In the SEM 20, the sample pieces 12a to 12f are irradiated with an electron beam EB from an electron beam column 21, and reflected electrons (e.g., backscattered electrons) BE and secondary electrons SE generated from the sample pieces 12a to 12f are detected by a detection tube 22.

Accordingly, an image signal based on the reflected electrons and an image signal based on the secondary electrons are obtained. The SEM image may be a reflected electron SEM image using only an image signal based on the reflected electrons, or may be a secondary electron SEM image based on the secondary electrons. In addition, the SEM image may be based on an image signal obtained by adding the image signal based on the reflected electrons and the image signal based on the secondary electrons. The controller 23 of the SEM 20 stores image data of the obtained SEM images (first time) of the sample pieces 12a to 12f.

In addition, in the imaging step S8, an irradiation position of the electron beam EB irradiated from the electron beam column 21 on the sample pieces 12a to 12f is performed by reading the coordinate value (X axis, Y axis) of the observation target area on the sample pieces 12a to 12f, which is obtained in the coordinate specifying step S7. This makes it possible to accurately irradiate the observation target area for stereoscopic observation specified in the observation target area specifying step S6 with the electron beam EB to obtain a target SEM image.

Next, the observation target area of the sample pieces 12a to 12f is irradiated with a gas ion beam GB using gas as, for example, argon or xenon as an ion source from a gas ion column 24 to expose a new observation surface inside the sample pieces 12a to 12f (milling step S9).

In the milling step S9, in addition to using the gas ion beam GB, a rare gas element such as argon or a neutral particle beam such as oxygen can be used. By using the neutral particle beam, it is possible to reduce an influence of charge-up.

The gas ion beam column 24 can be irradiated at a low acceleration voltage of about 1 kV by ionizing gas such as argon gas. Since such a gas ion beam GB has a lower converging property than a converging ion beam (FIB) or the like used for sample processing, an etching rate on the sample pieces 12a to 12f is low. Therefore, precise shaving can be performed without significantly damaging the soft sample pieces 12a to 12f of the biological tissue or the like.

In addition, in the milling step S9, an irradiation position of the gas ion beam GB irradiated from the gas ion beam column 24 on the sample pieces 12a to 12f is obtained by reading the coordinate value (X axis, Y axis) of the observation target area on the sample pieces 12a to 12f, which is obtained in the coordinate specifying step S7. Accordingly, the observation target area for performing the stereoscopic observation specified in the observation target area specifying step S6 can be accurately irradiated with the gas ion beam GB to be shaved so as to reduce a thickness of the observation target area.

After the milling step S9, it is preferable to confirm a thickness of the sample pieces 12a to 12f as appropriate (thickness confirmation step S10). In the thickness confirmation step S10, the thickness can be measured by energy dispersive X-ray spectroscopy (EDS) or a change in intensity of the reflected electrons.

Next, a SEM image of a new observation surface obtained by shaving the sample pieces 12a to 12f exposed by the milling step S9 in the depth direction is obtained (imaging step S8). Image data of the SEM image (second time) of the new observation surface is stored.

As described above, the milling step S9 and the imaging step S8 are repeated until a predetermined depth of the sample pieces 12a to 12f set in advance or a predetermined number of imaging times set in advance. Accordingly, a predetermined number of times of SEM images (n times) continuous in the depth direction in the observation target area of the sample pieces 12a to 12f are obtained.

Thereafter, in the controller 23, image processing is performed on n times of SEM images of each of the sample pieces 12a to 12f as three-dimensional SEM images, and image processing is performed in which the three-dimensional SEM images are aligned in the depth direction separately toward the sample pieces 12a to 12f, whereby a three-dimensional SEM image in the depth direction in the observation target area of the entire sample block can be obtained.

It is also preferable to set the sample pieces 12a to 12f to remain in a predetermined thickness separately after the SEM images of all the imaging times are obtained. Hereby, the observation samples 13a to 13f having the remaining sample pieces 12a to 12f can be used or preserved as different observation materials, and re-verification or the like can be performed later.

As described above, according to the method for observing the biological tissue sample of the present illustrative embodiment, the sample block obtained by embedding the biological tissue in a resin is cut into a plurality of sample pieces, and a SEM image is obtained while shaving each of the sample pieces in the depth direction by milling, so that when the plurality of sample pieces were cut from the sample block, a thickness of each of the sample pieces can be cut out thicker (about 100 nm to 200 nm) than that in the related art. Accordingly, it is possible to easily cut out a sample piece which requires an advanced technology in the related art.

In addition, in order to shave the observation target area of each of the sample pieces in the depth direction, milling is performed by the gas ion beam, and thus it is possible to expose the observation surface set inside the depth direction without damaging cells or the like of a resin embedding object of the biological tissue which is a relatively soft sample. Then, by synthesizing the SEM images of all the observation surfaces as three-dimensional images, it is possible to easily obtain the three-dimensional SEM image of the observation target area present in the biological tissue of the sample.

In addition, by first observing the sample piece with an optical microscope to determine the observation target area and recording the observation target area coordinate with the SEM, it is possible to accurately shave the observation target area in the depth direction to obtain a SEM image in the milling step S9 and the imaging step S8.

Further, if the sample piece is set to remain in a predetermined thickness after the SEM images of all the number of times of imaging are obtained, it is possible to preserve the remaining sample pieces and to perform re-verification or the like later.

Although the illustrative embodiment of the present disclosure has been described above, the illustrative embodiment is presented as an example, and is not intended to limit the scope of the invention. The illustrative embodiment can be carried out in various other modes, and various omissions, substitutions, and changes can be performed without departing from the scope of the invention as defined in the appended claims.

## Claims

1. An observation method of a biological tissue sample for observing a three-dimensional structure of the biological tissue sample, the method comprising:
cutting out a sample from the biological tissue, staining the sample, and embedding the sample in a resin to form a sample block;
cutting up the sample block into a plurality of sample pieces (12a-12f) and fixing each of the sample pieces to a sample piece placement member (11) to form a plurality of observation samples (13a-13f);
observing each of the observation samples with an optical microscope and specifying an observation target area for performing precise observation;
observing the observation target area with a scanning electron microscope and specifying and registering a coordinate of the observation target area on the sample piece for each of the observation samples;
milling the sample piece comprising irradiating the observation target area of the sample piece with an ion beam using gas as an ion source or a neutral particle beam with reference to the coordinate and exposing an observation surface inside the sample piece; and
obtaining a scanning electron microscope (SEM) image of the observation surface with the scanning electron microscope.

2. The method for observing a biological tissue sample according to claim 1, wherein the milling of the sample piece and the obtaining of the SEM image are alternately performed a plurality of times to obtain the SEM image in a thickness direction of the observation target area of the sample piece.

3. The method for observing a biological tissue sample according to claim 2, wherein the sample piece is left on the sample piece placement member after the milling of the sample piece and the obtaining of the SEM image are alternately performed the plurality of times.

4. The method for observing a biological tissue sample according to any one of claims 1 to 3, wherein the sample piece has a thickness in a range of 100 nm or more and 300 nm or less.

5. The method for observing a biological tissue sample according to any one of claims 1 to 3, wherein the cutting up of the sample block comprises cutting out the plurality of sample pieces continuous in a depth direction from the sample block embedded in the resin so that each of the sample pieces to have a thickness in a range of 100 nm or more and 300 nm or less by using a cutter.

6. The method for observing a biological tissue sample according to any one of claims 1 to 5, wherein the gas used in the milling of the sample piece is argon or xenon.

## Patentansprüche

1. Verfahren zum Beobachten einer biologischen Gewebeprobe zum Beobachten einer dreidimensionalen Struktur der biologischen Gewebeprobe, wobei das Verfahren umfasst:
Ausschneiden einer Probe aus dem biologischen Gewebe, Färben der Probe und Einbetten der Probe in einem Harz, um einen Probenblock zu bilden;
Schneiden des Probenblocks in mehrere Probenstücke (12a-12f) und Befestigen jedes der Probenstücke an einem Probenstück-Platzierungselement (11), um mehrere Beobachtungsproben (13a-13f) zu bilden;
Beobachten jede der Beobachtungsproben mit einem optischen Mikroskop und Spezifizieren eines Beobachtungszielbereichs zum Durchführen einer präzisen Beobachtung;
Beobachten des Beobachtungszielbereichs mit einem Rasterelektronenmikroskop und Spezifizieren sowie Referenzieren einer Koordinate des Beobachtungszielbereichs auf dem Probenstück für jede der Beobachtungsproben;
Fräsen des Probenstücks, welches ein Bestrahlen des Beobachtungszielbereichs des Probenstücks mit einem Ionenstrahl unter Verwendung von Gas als Ionenquelle oder einem Neutralteilchenstrahl unter Bezugnahme auf die Koordinate und ein Freilegen einer Beobachtungsfläche im Inneren des Probenstücks umfasst; und
Erhalten eines Bildes des Rasterelektronenmikroskops (SEM für Scanning Electron Microscope) der Beobachtungsfläche mit dem Rasterelektronenmikroskop.

2. Verfahren zum Beobachten einer biologischen Gewebeprobe nach Anspruch 1, wobei das Fräsen des Probenstücks und das Erhalten des SEM-Bildes mehrere Male abwechselnd durchgeführt werden, um das SEM-Bild in einer Dickenrichtung des Beobachtungszielbereichs des Probenstücks zu erhalten.

3. Verfahren zum Beobachten einer biologischen Gewebeprobe nach Anspruch 2, wobei die Gewebeprobe auf dem Probenstück-Platzierungselement gelassen wird, nachdem das Fräsen des Probenstücks und das Erhalten des SEM-Bildes mehrere Male abwechselnd durchgeführt wurden.

4. Verfahren zum Beobachten einer biologischen Gewebeprobe nach einem der Ansprüche 1 bis 3, wobei das Probenstück eine Dicke in einem Bereich von 100 nm oder mehr und 300 nm oder weniger aufweist.

5. Verfahren zum Beobachten einer biologischen Gewebeprobe nach einem der Ansprüche 1 bis 3, wobei das Schneiden des Probenblocks ein Ausschneiden der mehreren Probenstücke, die in einer Tiefenrichtung kontinuierlich sind, aus dem Probenblock, der in dem Harz eingebettet ist, sodass jedes der Probenstücke eine Dicke in einem Bereich von 100 nm oder mehr und 300 nm oder weniger aufweist, unter Verwendung einer Schneideeinrichtung umfasst.

6. Verfahren zum Beobachten einer biologischen Gewebeprobe nach einem der Ansprüche 1 bis 5, wobei das bei dem Fräsen des Probenstücks verwendete Gas Argon oder Xenon ist.

## Revendications

1. Procédé d'observation d'un échantillon de tissu biologique pour l'observation d'une structure tridimensionnelle de l'échantillon de tissu biologique, ce procédé comprenant :
le découpage d'un échantillon de tissu biologique, la coloration de l'échantillon, et le noyage de l'échantillon dans une résine pour former un bloc d'échantillon ;
le découpage du bloc d'échantillon en une pluralité de morceaux d'échantillon (12a-12f) et la fixation de chacun des morceaux d'échantillon à un élément de placement de morceau d'échantillon (11) pour former une pluralité d'échantillons d'observation (13a-13f) ;
l'observation de chacun des échantillons d'observation avec un microscope optique et la spécification d'une zone cible d'observation pour réaliser une observation précise ;
l'observation de la zone cible d'observation avec un microscope électronique de balayage et la spécification et l'enregistrement d'une coordonnée de la zone cible d'observation sur le morceau d'échantillon pour chacun des échantillons d'observation ;
le broyage du morceau d'échantillon comprenant l'irradiation de la zone cible d'observation du morceau d'échantillon avec un faisceau ionique en utilisant du gaz comme source ionique ou un faisceau de particules neutres en se référant à la coordonnée et en exposant une surface d'observation à l'intérieur du morceau d'échantillon ; et
l'obtention d'une image de microscope électronique de balayage (SEM) de la surface d'observation avec le microscope électronique de balayage.

2. Procédé d'observation d'un échantillon de tissu biologique selon la revendication 1, dans lequel le broyage du morceau d'échantillon et l'obtention de l'image SEM sont réalisés alternativement une pluralité de fois pour obtenir l'image SEM dans le sens de l'épaisseur de la zone cible d'observation du morceau d'échantillon.

3. Procédé d'observation d'un échantillon de tissu biologique selon la revendication 2, dans lequel le morceau d'échantillon est laissé sur l'élément de placement de morceau d'échantillon après que le broyage du morceau d'échantillon et l'obtention de l'image SEM ont été réalisés alternativement une pluralité de fois.

4. Procédé d'observation d'un échantillon de tissu biologique selon l'une quelconque des revendications 1 à 3, dans lequel le morceau d'échantillon a une épaisseur de l'ordre de 100 nm ou plus et de 300 nm ou moins.

5. Procédé d'observation d'un échantillon de tissu biologique selon l'une quelconque des revendications 1 à 3, dans lequel le découpage du morceau d'échantillon comprend le découpage de la pluralité de morceaux d'échantillon en continu dans un sens de l'épaisseur depuis le bloc d'échantillon noyé dans la résine de manière à ce que chacun des morceaux d'échantillon ait une épaisseur de l'ordre de 100 nm ou plus et de 300 nm ou moins en utilisant un cutter.

6. Procédé d'observation d'un échantillon de tissu biologique selon l'une quelconque des revendications 1 à 5, dans lequel le gaz utilisé dans le broyage du morceau d'échantillon est de l'argon ou du xénon.
